# EUROPÄISCHE PATENTANMELDUNG

(11) **EP 1 862 768 A2**
(43) Veröffentlichungstag der Anmeldung: **05.12.2007**
(21) Anmeldenummer: 07008506.3
(22) Anmeldetag: 26.04.2007
(51) Int. Cl.: G01D 5/14

(54) **Sensoranordnung auf Hall-Basis, die zur Messung linearer Bewegungen ausgebildet ist.**

(30) Priorität: 27.04.2006 DE 102006025493
(71) Anmelder: Hirschmann Automotive GmbH, 6830 Rankweil-Brederis (AT)
(72) Erfinder: Dengler, Werner, 6714 Nüziders (AT); Moosmann, Alexander, 6850 Dornbirn (AT)
(74) Vertreter: Dietrich, Barbara

(57) **Zusammenfassung**

Die Erfindung betrifft eine Sensoranordnung (1) auf Hall-Basis, die zur Messung linearer Bewegungen ausgebildet ist und eine Hallsonde (3) sowie zumindest einem Magneten (4), der relativ zu der Hallsonde (3) oder umgekehrt bewegbar ist, wobei erfindungsgemäß vorgesehen ist, dass zwei Magneten (4, 5) in vorgegebener Distanz zueinander angeordnet sind, wobei zwischen den Magneten ein Distanzteil (6) aus einem magnetisch leitenden Werkstoff angeordnet ist.

## Beschreibung

Die Erfindung betrifft eine Sensoranordnung auf Hall-Basis gemäß den Merkmalen des Oberbegriffes des Patentanspruches 1.

Solche Sensoranordnungen auf Hall-Basis, die zur Messung linearer oder rotatorischer Bewegungen ausgebildet sind, sind grundsätzlich bekannt.

Daneben sind weitere, insbesondere hochgenaue Messsysteme bekannt, die aber kostenintensiv sind und auf anderen Technologien, wie z. B. der induktiven Wegmessung, basieren.

Außerdem sind im Stand der Technik die linearen Wegmessungen mittels Sensoranordnungen auf Hall-Basis auf kleine Wege (typischerweise bis 20 mm) beschränkt.

Sollen lineare Bewegungen (Wegmessungen) über größere Strecken mittels Hall-Magnetkreissystemen mit geschlossenen Magnetkreisen erfasst werden, sind aufwendige Sensoranordnungen erforderlich, die in nachteiliger Weise einen größeren Bauraum benötigen.

Der Erfindung liegt daher die Aufgabe zugrunde, eine Sensoranordnung auf Hall-Basis, die zur Messung linearer Bewegungen ausgebildet ist, bereit zu stellen, die die eingangs geschilderten Nachteile vermeidet und die dazu ausgebildet ist, größere Messbereiche auf einfache und kostengünstige Art und Weise zu ermöglichen.

Diese Aufgabe ist durch die Merkmale des Patentanspruches 1 gelöst.

Erfindungsgemäß ist vorgesehen, dass zwei Magneten in vorgegebener Distanz zueinander angeordnet sind, wobei zwischen den Magneten ein Distanzteil aus einem magnetisch leitenden Werkstoff angeordnet ist. Das Hauptaugenmerk der Erfindung liegt daher auf dem zu messenden Target. Als Target wird das Messobjekt bzw. ein Teil des Messobjektes (wie z. B. ein innerer Kern) bezeichnet, welches das messbare Magnetfeld erzeugt, welches in erfindungsgemäßer Weise aus drei Komponenten besteht. Zwei dieser Komponenten sind die beiden Magnete, die in vorgegebener Distanz zueinander angeordnet sind und sich vorzugsweise am Ende des linearen Messbereiches angeordnet sind. Als zusätzliche Komponente ist zur Magnetfeldverlängerung zwischen den beiden Magneten ein Distanzteil aus einem magnetisch leitenden Werkstoff angeordnet, welches vorzugsweise nahtlos zwischen den beiden Magneten (Magnetquellen) angeordnet ist. Bei der Ausrichtung der Magnete ist eine unterschiedliche Orientierungsrichtung entscheidend. D. h., dass sich an den Enden des Targets (Messobjekt) sich ein Nord- und/oder ein Südpol ausbilden muss.

Zur Realisierung der Magnete ist vorgesehen, dass diese in an sich bekannter Weise Dauermagnete, Elektromagnete oder kunststoffgebundene Magnete sind. Bei den kunststoffgebundenen Magneten handelt es sich um ein Kunststoffmaterial, in dem ein magnetisierbarer Werkstoff (z. B. Eisenpartikel) einbringbar ist. Zur Erzielung einer besonders hohen Festigkeit eines solchen kunststoffgebundenen Magnetes kann dieser Materialmix gesintert werden.

Die Erfindung bietet also den Vorteil, dass gegenüber den bekannten Sensoren aus dem Stand der Technik kein geschlossener Magnetkreis erforderlich ist. Außerdem lassen sich der Sensor (Hall-Sonde) und das Target aufgrund des sehr geringen Platzbedarfes sehr leicht in ein Gesamtsystem integrieren. Außerdem ermöglicht die Erfindung einen besonders einfachen geometrischen Aufbau des Messobjektes. Ein weiterer Vorteil ist darin zu sehen, dass bei z. B. runder oder ovaler Querschnittsform des Targets die gesamte Sensoranordnung rotationsunempfindlich ist, das Target als Kern des zu messenden Objektes kann sich um seine eigene Symmetrieachse drehen, ohne dass sich der lineare Messwert verändert und zu einer Fehlanzeige führt. Außerdem ermöglicht die erfindungsgemäße Sensoranordnung ein günstiges Temperaturverhalten bzw. eine Kompensation von Temperatureinflüssen. Bei richtiger Materialauswahl der Zusatzkomponente (Permiabilität und Temperaturkoeffizient) ist eine vollständige Kompensation innerhalb der drei Komponenten des Targets möglich.

In Weiterbildung der Erfindung besteht das Distanzteil aus einem Vollmaterial oder ist hohl ausgebildet. Aufgrund dieser Alternativen besteht die Möglichkeit, das Distanzteil in Abhängigkeit der Bauraumverhältnisse und auch im Hinblick auf seine Fertigung und spätere Montage im Bauraum anzupassen. Wenn das Distanzteil aus Vollmaterial besteht, kann es beispielsweise höheren Kräften widerstehen, wenn es z. B. in einem bewegbaren oder fest stehenden Teil einer Messanordnung integriert wird. Diese Widerstandsfähigkeit gegenüber höheren Drücken ist insbesondere dann wichtig, wenn das Distanzteil von dem Bauteil der Messanordnung umspritzt wird, wenn diese in einem Kunststoffspritzgußverfahren hergestellt wird. Unter dem Aspekt einer Gewichtsersparnis ist es von Vorteil, wenn das Distanzteil hohl, insbesondere hülsenförmig, ausgebildet ist. Durch die hohle Ausgestaltung des Distanzteiles wird Material und damit Gewicht eingespart. Die hülsenförmige Ausgestaltung hat darüber hinaus den Vorteil, dass eine schmale und längliche Bauform gegeben ist, so dass dadurch die erfindungsgemäße Sensoranordnung in dem Target integriert werden kann. Der Querschnitt bleibt in seinem axialen Verlauf gleich oder kann sich verändern. So sind beispielsweise konische oder auch gebogene Distanzteile denkbar. Dementsprechend kann auch die Gestalt und das Volumen der beiden Magnete gleich oder unterschiedlich sein.

In besonders vorteilhafter Weise ist in einer weiteren Ausgestaltung der Erfindung vorgesehen, dass das hülsenförmige Distanzteil auf einem Aufnahmedorn zusammen mit den Magneten angeordnet ist. Dadurch läßt sich diese Anordnung, bestehend aus erstem Magnet, sich anschließendem Distanzteil und daran anschießenden zweiten Magneten als Einheit vorfertigen, wobei diese vorgefertigte Anordnung dann an dem Target angebracht oder in diesem integriert werden kann. Dabei ist es denkbar, dass die auf den Aufnahmedorn aufgesetzten Magnete und das Distanzteil selber wiederum mit einer Hülle versehen, insbesondere umspritzt oder mit einem Schrumpfschlauch versehen werden, wobei alternativ dazu die auf den Aufnahmedorn aufgesetzten Magnete und das Distanzteil in einer Spritzgußform zur Herstellung des bewegbaren oder fest stehenden Bauteiles der Messanordnung eingesetzt und anschließend umspritzt werden. Damit ist in einem Fertigungsschritt die Messanordnung mit der erfindungsgemäßen Sensoranordnung versehen worden.

Die gesamte Messanordnung besteht somit aus zumindest einem fest stehenden Bauteil und einem relativ linear dazu bewegbaren Bauteil, wobei in dem fest stehenden Bauteil zumindest die Hallsonde und in dem bewegbaren Bauteile die beiden Magnete mit ihrem dazwischen angeordneten Distanzteil angeordnet sind. Auch die umgekehrte Anordnung ist möglich, dass nämlich die Hallsonde in dem bewegbaren Bauteil und die übrigen Elemente in dem fest stehenden Bauteil untergebracht sind. Bei den fest stehenden und bewegbaren Bauteilen handelt es sich in besonders vorteilhafter Weise um Bauteile aus Kunststoff, die im Spritzgußverfahren hergestellt werden. Dadurch lassen sich sowohl die Bauräume für die Messanordnung als auch die Hallsonde in diesen Bauteilen integrieren, so dass nach der Herstellung der Bauteile entweder die jeweiligen Elemente (z. B. Magnete und Distanzteil oder Hallsonde) schon integriert sind oder Bauräume zur Verfügung stehen, wo diese Elemente eingesetzt werden können. Je nach länglicher Erstreckung des Distanzteiles und auch der länglichen Erstreckung der beiden Magnete kann der gewünschte Messbereich, das heißt die Länge des linearen Messbereiches, abgestimmt werden. Aufgrund der Wirkungsweise der erfindungsgemässen Sensoranordnung reicht der Messbereich in etwa von der axialen Mitte des ersten Magneten bis hin zu der axialen Mitte des zweiten Magneten, kann aber in die beiden anderen Richtungen etwas davon abweichen.

Als mögliche Ausgangssignale der Sensoranordnung kommen analoge Ausgangsspannungen in Betracht. Daneben ist es denkbar, eine Schnittstelle der Sensoranordnung bereit zu stellen, an der spannungs- oder stromabhängige Pulsweiten modulierte Signale abgegeben werden.

Das Distanzteil besteht beispielsweise aus Stahl, kann aber auch ein Ferrit (zum Beispiel ein ferromagnetisches Material) sein. Es besteht aus Vollmaterial, kann aber auch als Hülse oder dergleichen ausgebildet sein.

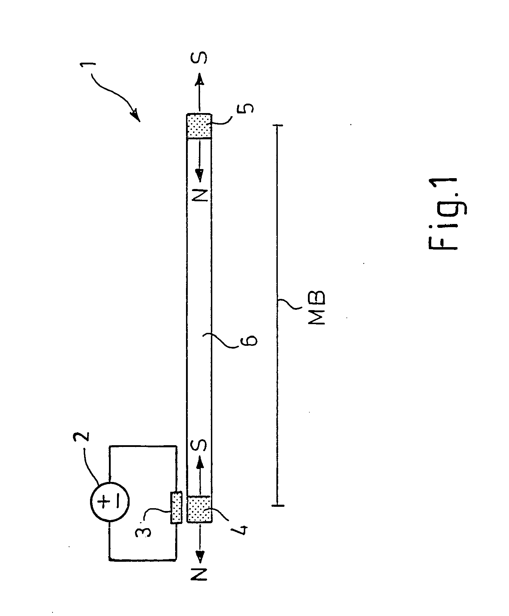

Ausführungsbeispiele der Erfindung sind, soweit im Einzelnen dargestellt, in den Figuren 1 bis 5 gezeigt. Eine Sensoranordnung 1 weist in an sich bekannter Weise ein Messinstrument 2 auf, die mit einer Hall-Sonde 3 verbunden ist. Das Messobjekt (Target) besteht aus zwei auf Distanz zueinander angeordneten Magneten 4, 5, die mittels eines Distanzteiles 6 aus einem magnetisch leitenden Werkstoff auf Distanz gehalten werden. Zu diesem Zweck ist an dem jeweiligen Ende des Distanzteiles 6 der zugehörige Magnet 4, 5 angeordnet und befestigt, beispielsweise mittels einer Klebe- oder Rastverbindung dort festgelegt. Das bedeutet, dass die Magneten 4, 5 am Ende des linearen Messbereiches angeordnet sind, der sich von der äußeren linken Kante des Magneten 4 bis zur äußeren rechten Kante des Magneten 5 erstreckt.

Die Messung erfolgt dadurch, dass entweder das Messobjekt, bestehend aus den drei Komponenten 4, 5, 6, stillsteht und dazu relativ die Hall-Sonde 3 bewegt wird, oder umgekehrt.

Aufgrund der Wirkungsweise der erfindungsgemässen Sensoranordnung 1 reicht der Messbereich (MB) in etwa von der axialen Mitte des ersten Magneten 4 bis hin zu der axialen Mitte des zweiten Magneten 5, kann aber in die beiden anderen Richtungen etwas davon abweichen.

In der Figur 1 ist bei deren Betrachtung erkennbar, dass der linke Magnet 4 nach links seinen Nordpol (N) und nach rechts seinen Südpol (S) ausgerichtet hat. Gleiches gilt für den rechten Magneten 5, bei dem der Nordpol (N) nach links und der Südpol (S) nach rechts weist. Es wird darauf hingewiesen, dass die erfindungsgemässe Sensoranordnung 1 ebenfalls funktioniert, wenn die Ausrichtungen von Nordpol und Südpol bei den beiden Magneten 4, 5 jeweils anders herum ausgerichtet ist, genauso wie in dem Fall, dass z. B. bei dem linken Magneten 4 der Nordpol (N) nach links und der Südpol (S) nach rechts weist, während bei dem rechten Magneten 5 der Südpol (S) nach links und der Nordpol (N) nach rechts weist.

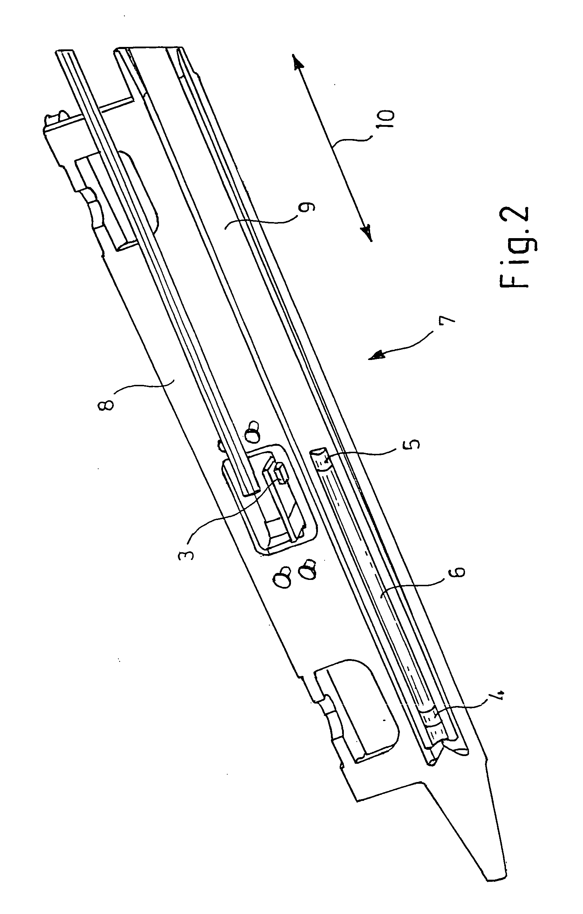

Bei einem Anwendungsbeispiel der erfindungsgemässen Sensoranordnung 1, wie sie in Figur 1 gezeigt ist, ist gemäss Figur 2 eine Messanordnung 7 gezeigt, in der die prinzipielle Sensoranordnung 1 gemäss Figur 1 integriert ist. Bei dieser Messanordnung 7 zur Messung linearer Wege zwischen einem fest stehenden Bauteil 8 und einem bewegbaren Bauteil 9 in Bewegungsrichtung 10 ist die Hallsonde 3 in dem fest stehenden Bauteil 8 integriert, während das Target, bestehend aus Magneten 4, 5 und Distanzteil 6, in dem hülsenförmigen bewegbaren Bauteil 9 integriert sind. Das hülsenförmige bewegbare Bauteil 9 kann somit in Bewegungsrichtung 10 relativ zu dem fest stehenden Bauteil 8, welches einen entsprechenden Aufnahmeraum für das bewegbare Bauteil 9 aufweist, bewegt werden. Die Messanordnung 7 gemäss Figur 2 befindet sich in der einen Endstellung, bei der in etwa der zweite Magnet 5 in Höhe der Hallsonde 3 befindet. Bei einer Herausbewegung des bewegbaren Bauteiles 9 aus dem Aufnahmeraum in dem fest stehenden Bauteil 8 gleitet das Distanzteil 6 an der Hallsonde 3 vorbei, bis der erste Magnet 4 in etwa auf Höhe der Hallsonde 3 vorbeikommt. Damit ist dann der gesamte Messbereich der Sensoranordnung überschritten, wozu in vorteilhafter Weise an den Bauteilen 8, 9 entsprechende Anschläge (hier nicht dargestellt) vorhanden sind, um auch mechanisch den Messbereich in Bewegungsrichtung 10 zu begrenzen. Einer dieser Anschläge ist in Figur 2 dadurch realisiert, dass das bewegbare Bauteil 9 nicht weiter in den Aufnahmeraum in dem fest stehenden Bauteil 8 hineinbewegt werden kann, da es mit seinem Ende an den entsprechenden Anschlag im fest stehenden Bauteil 8 zur Anlage kommt. Bei einer solchen Messanordnung 7 gemäss Figur 2 lassen sich beispielsweise Messbereiche in Bewegungsrichtung 10 von etwa 45 bis 50 mm realisieren, so dass z. B. auch das hier ebenfalls hülsenförmig ausgebildete Distanzteil 6 eine dementsprechende Länge aufweist. Das Distanzteil 6, welches bei dem Anwendungsbeispiel gemäss Figur 2 verwendet wird, ist entweder stabförmig (aus Vollmaterial), an dessen Stirnseiten die Magnete 4, 5 befestigt (z. B. angeklebt) sind, wobei es seinerseits ebenfalls hülsenförmig zwecks Gewichtsersparnis ausgebildet sein kann. Damit weist das hülsenförmige Distanzteil 6 einen hohlen Innenraum auf.

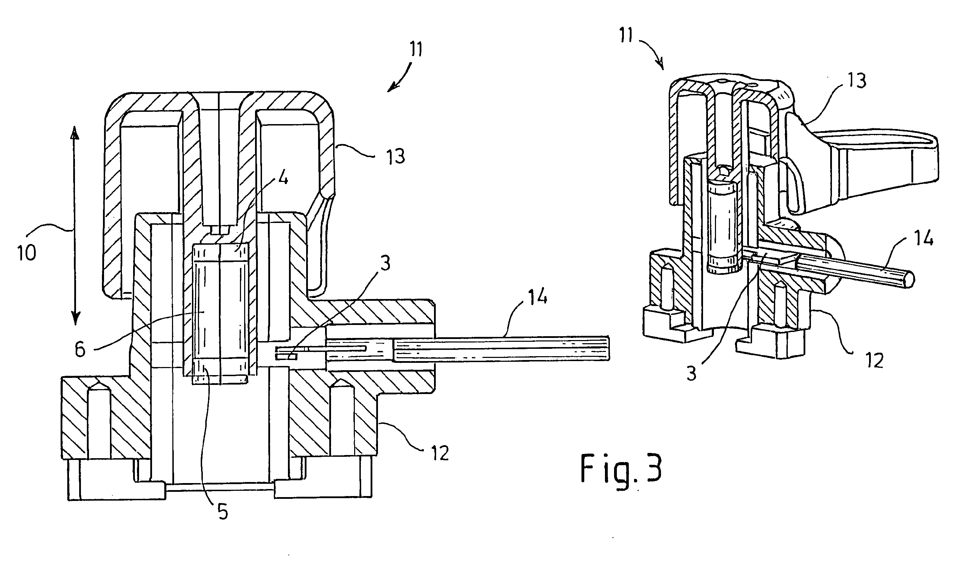

In den Figuren 3 bis 5 ist ein weiteres Anwendungsbeispiel gezeigt, hier zur Messung von linearen Bewegungen etwa im Bereich von 20 bis 25 mm. Die Messanordnung 11 in Figur 3 besteht wiederum aus zumindest einem feststehenden Bauteil 12 und zumindest einem bewegbaren Bauteil 13, die linear in Bewegungsrichtung 10 zueinander bewegbar sind. Die erfindungsgemässe Sensoranordnung ist mit ihren Magneten 4, 5 und dem dazwischen angeordneten Distanzteil 6 in dem bewegbaren Bauteil 13 angeordnet, während die Hallsonde 3 in einem entsprechenden Bauraum in dem fest stehenden Bauteil 12 untergebracht ist. Die Hallsonde 3 ist bei dieser Ausführungsform beispielsweise auf einer Platine angeordnet, auf der sich gegebenenfalls weitere elektronische Bauelemente (z. B. zur Signalauswertung oder Signalumwandlung) befinden können, während über ein Kabel 14 die Signale der Hallsonde 3 an eine nicht dargestellte Auswerteeinheit abgegeben werden. Bei dieser Ausführungsform sind die beiden Bauteile 12, 13 Kunststoffspritzgußteile, wobei in dem Bauteil 12 nach dessen Herstellung ein Bauraum zur Verfügung gestellt wird, in dem die Hallsonde 3 eingebracht wird. Der in diesen Bauraum eingebrachte Teil des Kabels 14 mit der Platine und der darauf angeordneten Hallsonde 3 kann seinerseits wieder mit Kunststoff umspritzt sein, damit er in den Bauraum des Bauteiles 12 paßt und dort festgelegt werden kann sowie vor mechanischen Beschädigungen geschützt ist. Die Bauteile 4, 5, 6 können nach der Herstellung des Bauteiles 13 dort montiert werden, wobei es alternativ auch möglich ist, mit Herstellung des Bauteiles 13 die Elemente 4, 5, 6 dort schon zu integrieren. Bezüglich der relativen Bewegung der Bauteile 12, 13 in Bewegungsrichtung 10 zueinander gilt schon das zum Ausführungsbeispiel gemäss Figur 2 ausgeführte, dass nämlich Endanschläge vorhanden sein können, die den Messbereich der erfindungsgemässen Sensoranordnung begrenzen. Daneben ist es nicht ausgeschlossen, einen solchen linearen Verschiebeweg zwischen den beteiligten Bauteilen zuzulassen, dass der Messbereich der erfindungsgemässen Sensoranordnung 1 verlassen wird.

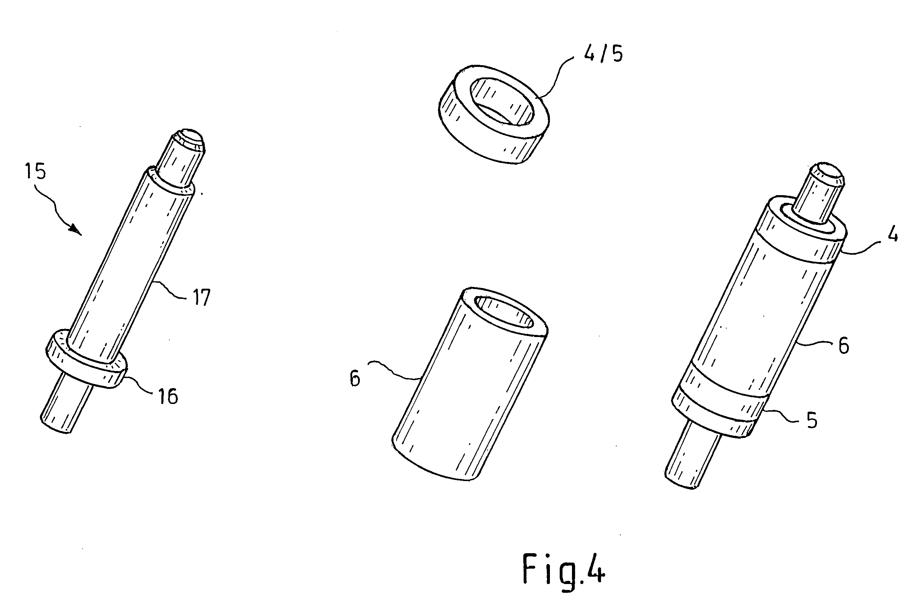

In Figur 4 sind die beiden Magnete 4, 5 sowie das hier hülsenförmig ausgebildete Distanzteil 6 gezeigt, die auf einem entsprechend geformten Aufnahmedorn 15 aufgesetzt werden können. Der Aufnahmedorn 15, ebenfalls beispielsweise ein Kunststoffspritzgußteil, weist einen Absatz 16 auf, der tellerförmig gestaltet ist. Auf diesen wird zunächst der eine Magnet 4, dann anschließend das Distanzteil 6 und dann wiederum anschließend der zweite Magnet 5 aufgesetzt. Dabei können die Teile 4 bis 6 auf der entsprechend gestalteten Welle 17 des Aufnahmedornes 15 bewegbar oder fest stehend, (z. B. durch Kleben) angeordnet werden. Die vorgefertigte Einheit, die in Figur 4 ganz rechts dargestellt ist, kann mit einer Hülle (z. B. durch Umspritzen oder Aufbringen eines Schrumpfschlauches) versehen werden oder in dieser Form in ein Werkzeug eingelegt werden, wobei das Werkzeug das bewegbare Bauteil 13 (oder das fest stehende Bauteil 12) durch Kunststoffspritzen entstehen läßt. Damit bilden diese Teile 4 bis 6 eine Einheit mit einem der Bauteile 12, 13 der Messanordnung 11, so dass die erfindungsgemässe Sensoranordnung 1, wie sie in Figur 1 gezeigt ist, ohne weiteres in bestehende Bauteile integriert werden kann.

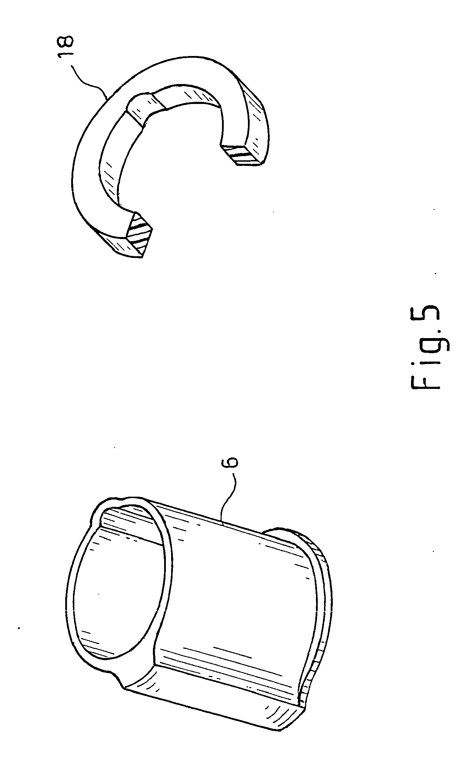

In Figur 5, links, ist dargestellt, dass das Distanzteil 6 wieder hülsenförmig, hier allerdings mit einem asymmetrischen Querschnitt, ausgebildet ist. Dadurch ist es beispielsweise durch das Vorhandensein von Vorsprüngen, Nuten oder dergleichen möglich, dass das Distanzteil 6 in dem Bauteil 12 oder 13, in dem es eingesetzt wird, geführt eingesetzt wird.

In Figur 5, rechts, ist ein. Distanzring 18 aus einem magnetisch nicht leitfähigen Werkstoff, wie z. B. Kunststoff, dargestellt, der zwischen Magnet 4 oder 5 und Distanzteil 6 oder zwischen Magnet 4 oder 5 und dem umgebenden Bauteil angeordnet werden kann, um z. B. Toleranzen auszugleichen.

Die bezüglich der vorstehenden Messanordnungen 7, 11 genannten Dimensionen (lineare Wegmessbereiche) sind beispielhaft und können je nach Anwendungsfall variieren. Diese Variation läßt sich zum einen durch die axiale Länge der Magnete 4, 5 und zum anderen durch die axiale Länge des Distanzteiles 6 bestimmen. Außerdem sind die relativen axialen Längenverhältnisse der axialen Längen der Magnete 4, 5 zu dem Distanzteil 6 in den vorangegangenen Figuren nur beispielhaft und können ebenfalls variieren. So kann die axiale Länge eines Magneten 4, 5 genauso lang sein, wie die axiale Länge des Distanzteiles 6, wobei es auch denkbar ist, dass die axiale Länge der Magneten 4, 5 die axiale Länge des Distanzteiles 6 überschreitet, insbesondere deutlich überschreitet.

### Bezugszeichenliste

- 1.: Sensoranordnung
- 2.: Messinstrument
- 3.: Hallsonde
- 4.: erster Magnet
- 5.: zweiter Magnet
- 6.: Distanzteil
- 7.: Messanordnung
- 8.: feststehendes Bauteil
- 9.: bewegbares Bauteil
- 10.: Bewegungsrichtung
- 11.: weitere Messanordnung
- 12.: feststehendes Bauteil
- 13.: bewegbares Bauteil
- 14.: Kabel
- 15.: Aufnahmedorn
- 16.: Absatz
- 17.: Welle
- 18.: Distanzring

## Patentansprüche

1. Sensoranordnung (1) auf Hall-Basis, die zur Messung linearer Bewegungen ausgebildet ist und eine Hallsonde (3) sowie zumindest einem Magneten (4), der relativ zu der Hallsonde (3) oder umgekehrt bewegbar ist, **dadurch gekennzeichnet, dass** zwei Magneten (4, 5) in vorgegebener Distanz zueinander angeordnet sind, wobei zwischen den Magneten (4, 5) ein Distanzteil (6) aus einem magnetisch leitenden Werkstoff angeordnet ist.

2. Sensoranordnung (1) nach Anspruch 1, **dadurch gekennzeichnet, dass** die Magneten (4, 5) am Ende des linearen Meßbereiches (MB) angeordnet sind.

3. Sensoranordnung (1) nach Anspruch 1 oder 2, **dadurch gekennzeichnet, dass** die Magneten (4, 5) Dauermagnete, Elektromagnete oder kunststoffgebundene Magnete sind.

4. Sensoranordnung (1) nach einem der Ansprüche 1 bis 3, **dadurch gekennzeichnet, dass** das Distanzteil (6) aus Stahl oder einem Ferrit besteht.

5. Sensoranordnung (1) nach einem der Ansprüche 1 bis 4, **dadurch gekennzeichnet, dass** das Distanzteil (6) aus Vollmaterial besteht oder hohl ausgebildet ist.

6. Sensoranordnung (1) nach einem der Ansprüche 1 bis 5, **dadurch gekennzeichnet, dass** das Distanzteil (6) hülsenförmig ausgebildet ist.

7. Sensoranordnung (1) nach einem der Ansprüche 1 bis 6, **dadurch gekennzeichnet, dass** das Distanzteil (6) in seinem axialen Verlauf einen gleichbleibenden oder sich ändernden Querschnitt aufweist.

8. Sensoranordnung (1) nach Anspruch 6, **dadurch gekennzeichnet, dass** das hülsenförmige Distanzteil (6) auf einem Aufnahmedorn (16) zusammen mit den Magneten (4, 5) angeordnet ist.

9. Sensoranordnung (1) nach Anspruch 8, **dadurch gekennzeichnet, dass** der Aufnahmedorn (16) Bestandteil eines Bauteils (12, 13) ist, in dem die Sensoranordnung (1) angeordnet ist.
